(19) **Europäisches Patentamt**
**European Patent Office**
**Office européen des brevets**

(11) **EP 3 685 893 B1**

(12) **EUROPEAN PATENT SPECIFICATION**

(45) Date of publication and mention
of the grant of the patent:
**10.11.2021  Bulletin 2021/45**

(51) Int Cl.:
**A63F 3/00** *(2006.01)*    **A63H 33/04** *(2006.01)*

(21) Application number: **20153527.5**

(22) Date of filing: **24.01.2020**

(54) **MAGNETIC ASSEMBLY**

MAGNETISCHE ANORDNUNG

ENSEMBLE MAGNÉTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.01.2019  IT 201900001229**

(43) Date of publication of application:
**29.07.2020  Bulletin 2020/31**

(73) Proprietor: **Plastwood Italia Srl
07023 Calangianus (OT) (IT)**

(72) Inventor: **TUSACCIU, Edoardo Pio
07023 Calangianus (OT) (IT)**

(74) Representative: **Mulas, Chiara et al
Barzanò & Zanardo Roma S.p.A.
Via Piemonte, 26
00187 Roma (IT)**

(56) References cited:
**EP-A1- 1 349 626      WO-A1-2006/129903
WO-A2-2009/007829      US-A- 5 769 681
US-A1- 2006 137 270     US-B2- 7 160 170**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

The present invention relates to a magnetic assembly for creating three-dimensional structures.

More precisely, the present invention relates to a magnetic assembly comprising magnetic elements, ferromagnetic elements and support panels which enable three-dimensional geometric grid structures to be created.

Magnetic assemblies that envisage the use of stabilising panels in combination with magnetic and ferromagnetic elements are known in the prior art.

One example of such a solution is described in European patent no. EP 1 349 626 B1.

Such magnetic assemblies enable a user, in particular a child, to build grid structures with a complex geometry by means of the magnetic and ferromagnetic elements, thanks to the use of one or more stabilising panels, which allow the structure thus formed to be two-dimensionally stabilised, a structure that would otherwise be flexible. In fact, the panel is fitted between the elements of the grid that delimit it and fills in the space thereof.

However, such panels do not have the function of supporting the structure, and do not enable complex three-dimensional structures extending upwards to be built, since they are not capable of locking the elements of the magnetic assembly in place.

Base panels having a plurality of seats for housing and locking in place elements of a magnetic assembly, for example ferromagnetic spheres, for the creation and support of grid structures by means of the elements of the magnetic assembly are known in the prior art.

One problem of said prior art solution is that the support panels are not sufficiently modular and do not enable complex magnetic structures to be created, since they only allow a vertical extension of the structure relative to their base extent.

In fact, each base has a limited number of seats and only by placing a number of base or support panels next to each other would it be possible to obtain magnetic structures capable of being extended in width. However, this proves to be difficult, since the panels are not capable of being locked to each other. Furthermore, a correct positioning of the base panels such as to enable the formation of magnetic structures depends on the user's ability. Another example of a magnetic assembly for creating three-dimensional structures can be found in the prior art document WO 2006/129903 A1.

The aim of the present invention is to overcome the problems of the prior art by developing support panels to be used in combination with magnetic assemblies which enable the construction of complex magnetic structures capable of being extended both in height and in width.

A further aim is to enable greater support, stability and solidity to be imparted to the magnetic structures to be constructed.

Furthermore, another aim is to obtain a modular solution.

The object of the present invention is a magnetic assembly for creating three-dimensional structures, said magnetic assembly comprising at least one ferromagnetic element, at least one magnetic element, magnetically couplable to said at least one ferromagnetic element, at least one support panel having a perimeter edge, said magnetic assembly being characterised in that it further comprises at least one connection element, said at least one connection element comprising a seat for removably housing and retaining a ferromagnetic element or a magnetic element, and at least one peripheral portion suitable for being removably coupled to at least one portion of the perimeter edge of said support panel and being locked thereto.

In particular, according to the invention, the removable coupling between said ferromagnetic element or said magnetic element and the seat of said connection element can be a mechanical coupling.

Moreover, according to the invention, said ferromagnetic element or said magnetic element can have a spherical shape, and said seat of the connection element can have a shape such as to house said spherical element by interlocking.

Again according to the invention, said support panel can have one or more seats, in particular one or more holes, for housing a ferromagnetic element or a magnetic element.

Further according to the invention, said seat of said connection element can have a plurality of teeth shaped so as to facilitate the insertion of said ferromagnetic element or said magnetic element.

Preferably, according to the invention, said seat of said connection element can be a through hole such as to enable the housing of said ferromagnetic element or said magnetic element by one of the two opposing faces of said connection element.

Furthermore, according to the invention, the removable coupling between the peripheral portion of said connection element and said portion of the perimeter edge of said support panel can be a mechanical coupling.

Again according to the invention, at least one portion of the perimeter edge of said support panel can have a lateral slot for inserting the peripheral portion of said connection element therein.

In particular, according to the invention, said peripheral portion of said connection element can be coupled to said lateral slot of said panel by means of a bayonet-like interlock.

More in particular, according to the invention, said lateral slot can be provided between the opposing faces of said support panel, said peripheral portion of said connection element can have at least one portion configured so as to be inserted in said lateral slot between said opposing faces of said support panel.

Further according to the invention, said lateral slot can have at least two protuberances or opposing indentations, each protuberance or indentation being at the inner portion of the opposing faces of the panel, the peripheral portion of said connection element can have an indentation or a protuberance on each of the two opposing faces thereof so that when said peripheral portion of said connection element is inserted into said lateral slot, each protuberance or indentation will interlock with the respective indentation or protuberance.

Furthermore, according to the invention, said support panel can have a polygonal shape, and said lateral slot can be fashioned in at least one corner of said polygonal support panel.

In particular, according to the invention, the lateral slot of the support panel and the peripheral portion of the connection element can have dimensions such that, when the connection element is coupled to the support panel, the geometric centre of the element housed in the connection element substantially coincides, in a top view of the panel, with the vertex of the corner of the panel in which said slot is fashioned.

More in particular, according to the invention, the ferromagnetic element or the magnetic element to be housed in said connection element can have a spherical shape, and the lateral slot of the support panel and the peripheral portion of the connection element can have dimensions such that, when the connection element is coupled to the support panel and the spherical element is housed in said seat of the connection element, the geometric centre of the spherical element substantially coincides, in a top view of the panel, with the vertex of the corner of the panel in which said slot is provided.

Even more in particular, according to the invention, each corner having said lateral slot can be chamfered or broken so as not to interfere with the ferromagnetic element or with the magnetic element when it is disposed in said connection element in turn coupled to the support panel.

Further according to the invention, the element to be housed in said seat of said connection element can be sphere-shaped, moreover, said magnetic assembly might comprise at least one bar-shaped element magnetically couplable to at least one sphere-shaped element, at least one side of said support panel with a polygonal shape can be dimensioned so that when a connection element is coupled at each of two contiguous corners of that side of the panel, the distance between the sphere-shaped elements housed in said two connection elements is equal to the length of a bar-shaped element.

Preferably, according to the invention, said support panel can comprise two half-panels that are removably couplable to each other.

In particular, according to the invention, said half-panels can comprise male-female couplings of a mechanical type.

Moreover, according to the invention, each half-panel can have one or more holes suitable for housing sphere-shaped elements and a clamping means at said holes configured so that when the respective spherical element is disposed at the hole of the inner face of a half-panel, and said half-panels are coupled to each other at the inner faces, said holes of each half-panel will be in a corresponding position and said sphere-shaped elements disposed in said one or more holes will be clamped in place by said clamping means, thus preventing or reducing the rotation thereof.

Preferably, according to the invention, said connection element can have a disc shape.

Again according to the invention, said magnetic element or said ferromagnetic element is a bar.

Finally, according to the invention, said connection element can have one or more openings so that, when a ferromagnetic element or a magnetic element is disposed in the seat of the connection element, said opening will enable the insertion of a magnetic or ferromagnetic element so as to allow the magnetic coupling.

The invention will now be described by way of illustration and not by way of limitation, with particular reference to the drawings of the appended figures, wherein:

figure 1 shows a perspective view of a support panel, four connection elements and nine ferromagnetic spheres of the assembly according to the invention, assembled in a first configuration;
figure 2 shows an exploded perspective view of the elements of the assembly of the configuration in figure 1;
figure 3 shows a further perspective view of the configuration in figure 1;
figure 4 shows an exploded perspective view of two half-panels making up the support panel of the assembly according to the invention;
figure 5 shows a cutaway perspective view relative to the axis VI-VI' of the assembled half-panels in figure 4;
figure 6 shows a sectional view along the axis VI-VI' of the assembled half-panels in figure 4;
figure 7 shows a cutaway perspective view relative to the axis IX-IX' of the second half-panel in figure 4;
figure 8 shows a further cutaway perspective view relative to the axis IX-IX' of the assembled half-panels in figure 4;
figure 9 shows a sectional view along the axis IX-IX' of the assembled half-panels in figure 4;
figure 10 shows a perspective view in a connection element of the assembly according to the invention;
figure 11a shows a front cutaway view along the axis XI-XI' of the connection element in figure 10;
figure 11b shows a sectional view along the axis XI-XI' of the connection element in figure 10;
figure 11c shows a perspective view of figure 11a;
figure 12a shows a cutaway perspective view along the axis XII-XII' of the connection element in figure 10 coupled to a sphere of the assembly according to the invention;

figure 12b shows a sectional view along the axis XII-XII' of the connection element in figure 10 coupled to a sphere of the assembly according to the invention;

figure 13 shows a perspective view of three support panels, eight connection elements, and thirteen spheres of the assembly according to the invention, assembled in a second configuration;

figure 14 shows a perspective view of two support panels, eight connection elements, a plurality of spheres and a plurality of bars of the assembly according to the invention, assembled in a third configuration;

figure 15 shows a perspective view of four support panels, twelve connection elements, a plurality of spheres and a plurality of bars of the assembly according to the invention, assembled in a fourth configuration;

figure 16 shows a perspective view of a plurality of support panels, a plurality of connection elements, a plurality of spheres and a plurality of bars of the assembly according to the invention, assembled in a fifth configuration;

figure 17 shows a top perspective view of three support square panels coupled to a support triangular panel by means of three connection elements of the assembly according to the invention, assembled in a sixth configuration;

figure 18 shows a top perspective view of a support panel coupled to four connection elements having an opening for coupling to bars and spheres of the assembly according to the invention, assembled in a seventh configuration; and

figure 19 shows a top perspective view of two support panels coupled to each other by means of four connection elements having an opening for coupling to bars and spheres of the assembly according to the invention, assembled in an eighth configuration.

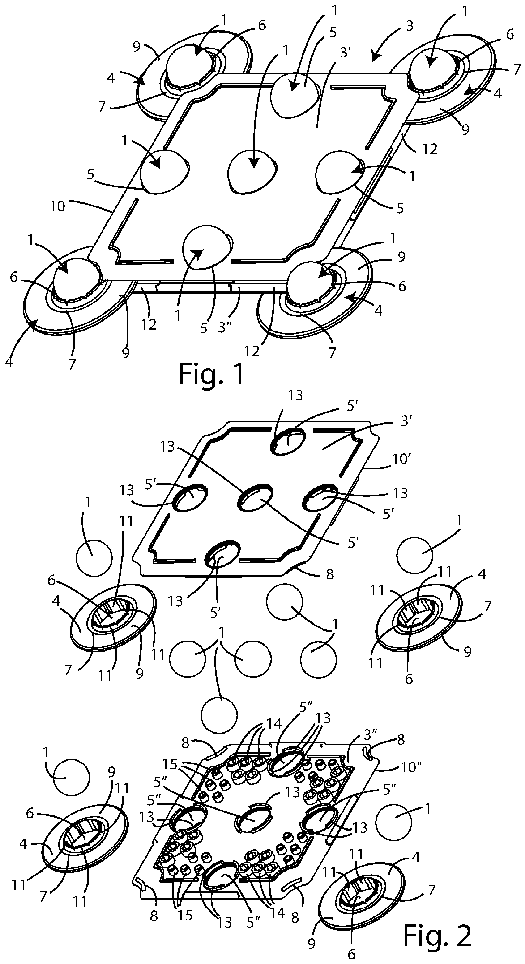

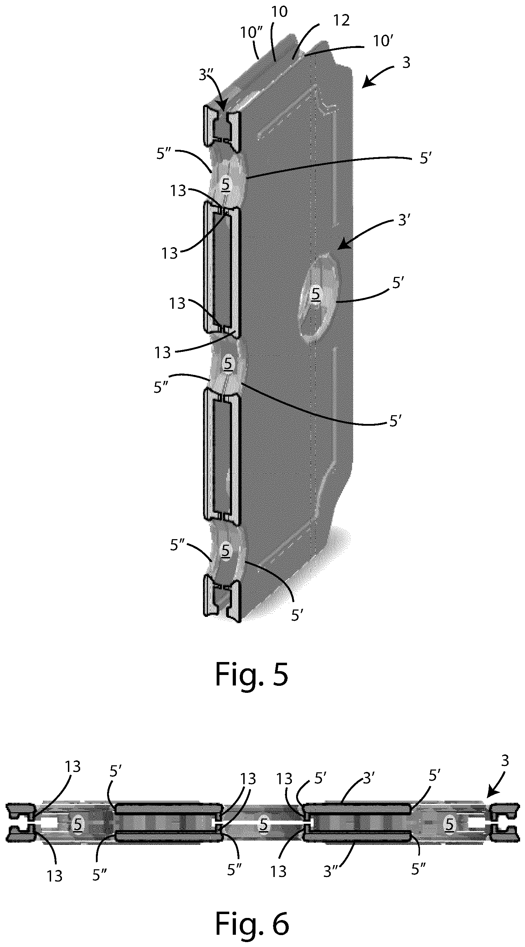

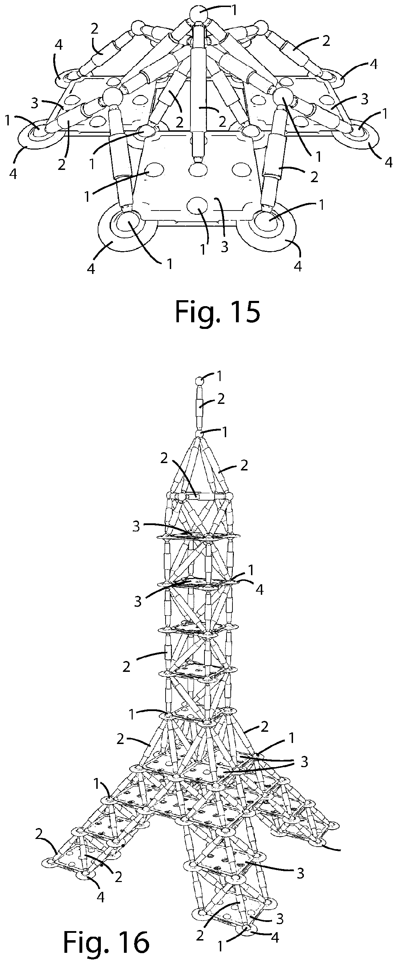

With reference to figures 1 - 19, one may observe the magnetic assembly according to the invention, whose elements can be assembled in a plurality of configurations, such as the ones shown by way of example in figures 1 and 13 - 19, in order to create three-dimensional structures.

In particular, said magnetic assemblies can be used as modular construction toys.

The magnetic assembly according to the invention comprises at least one ferromagnetic element 1, at least one magnetic element 2, magnetically couplable to said at least one ferromagnetic element 1, and at least one support panel 3.

The ferromagnetic element 1 in the figures is represented by a ferromagnetic sphere, preferably made of metal, in particular iron. It is evident that in other embodiments the ferromagnetic element can be a solid having a different shape, or a bar with ferromagnetic ends.

In the embodiment shown in the figures, the magnetic element 2 is a bar with magnetic ends, each end being capable of coupling magnetically to a ferromagnetic element of the assembly. In other embodiments, the magnetic element can be a magnetic sphere.

Thanks to the spherical shape of the ferromagnetic element 1 or of the magnetic element, a number of magnetic 2 or ferromagnetic bars can be coupled to a same sphere 1, enabling the creation of complex three-dimensional forms, in particular a geometric grid.

The magnetic assembly according to the invention preferably envisages the use of ferromagnetic or magnetic spheres in combination with magnetic or ferromagnetic bars, whose ends are configured to be coupled magnetically to the spheres.

In particular, bars of two sizes can be provided. A first bar of a first length $l_1$, for example 6.41 cm, and a second bar of a second length $l_2$, for example about 9.59 cm wherein the second length $l_2$ is equal to

$$l_2 = l_1 \cdot \sqrt{2}.$$

The support panel 3 has a perimeter edge 10 that delimits a prevalently flat surface having two opposing faces.

As will be seen further below, the support panel 3 can be a single, whole element, or it can be formed by two half-panels 3' and 3" that are removably couplable to each other.

The support panel 3 is preferably made of plastic material, in particular ABS or polypropylene.

The magnetic assembly according to the invention further comprises at least one connection element 4, which comprises a seat 6 for removably housing a ferromagnetic element 1 and retaining it in the seat 6. In other embodiments, not shown, said seat can be suitable for housing the magnetic element, which can be sphere-shaped or bar-shaped.

Furthermore, the connection element 4 has at least one peripheral portion 9 suitable for being removably coupled to at least one portion of the perimeter edge 10 of the support panel 3, becoming locked thereto.

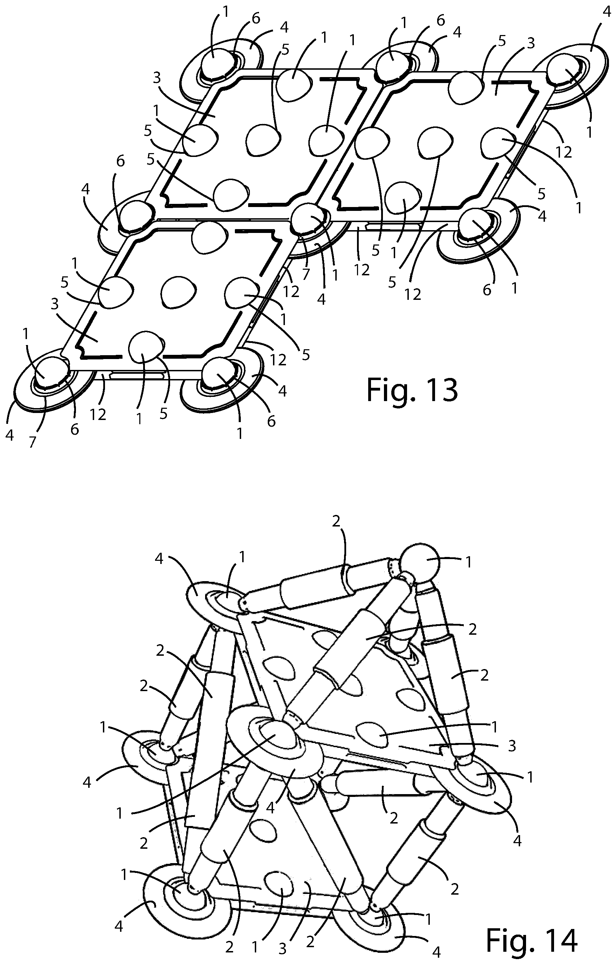

Thanks to the magnetic assembly according to the invention, it is possible to create complex three-dimensional structures (such as the ones shown in figures 13 - 16), since through the combined use of the support panels 3 and connection elements 4 one obtains bases capable of being extended in width.

In fact, the magnetic assembly according to the invention proves to be particularly modular, since each connection element is capable of being coupled to several support panels and at the same time each support panel is capable of being coupled to several connection elements, acting as a solid base for the creation of three-dimensional structures.

Furthermore, thanks to the solution according to the invention, said support panels 3 and the associated connection elements 4 can also be used to form several levels of the same three-dimensional structure, imparting greater stiffness to the magnetic structure formed from ferromagnetic elements and magnetic elements.

Thanks to the solution according to the invention, the support panels and the connection elements can also be used on the inside of the three-dimensional structure, i.e. not only at the base, to lend solidity thereto and enable it to be moved.

In other embodiments, for example shown in the figure 1 — 13 and 17, the components of the present invention, in particular the panels and the connection elements, can be used to create modular three-dimensional constructions in assemblies that do not necessarily employ magnetic components. In further embodiments, components of said assembly could comprise only sphere-shaped elements, or sphere-shaped elements and bars couplable to said spheres mechanically, or also bars having at least one spherical end suitable for being housed in the seat of the connection element and/or in the seat of the support panel.

A further object of the present invention can also be an assembly for creating three-dimensional structures, said assembly comprising at least one sphere 1, at least one support panel 3 having a perimeter edge 10, and at least one connection element 4, said at least one connection element 4 comprising a seat 6 for removably housing a sphere 1, and at least one peripheral portion 9 suitable for being removably coupled to at least one portion of the perimeter edge 10 of said support panel 3.

The features of the invention described previously and below apply mutatis mutandis also in the case of a non-magnetic assembly comprising the aforesaid components.

In particular, according to the invention, in the embodiment shown, the removable coupling between the peripheral portion 9 of said connection element 4 and said portion of the perimeter edge 10 of said support panel 3 is a mechanical coupling.

The mechanical coupling enables, on the one hand, a rigid coupling to be created between the components, allowing them to be decoupled only by means of further force exerted by the user, and at the same time it enables a reduction in the use of magnetic components, whose cost has an impact on the final price of the magnetic assembly.

Furthermore, it allows plastic materials to be used for the support panel 3 and for the connection element 4, thus also reducing the weight of the package containing the magnetic assembly.

More particularly, in the embodiment shown in the figures at least one portion of the perimeter edge 10 of said support panel 3 has a lateral slot 12 for the insertion therein of the peripheral portion 9 of said connection element 4. Said lateral slot 12 can be fashioned between the opposing faces of the support panel 3, when it is a single element, or, as in the embodiment shown in the figures, it coincides with an empty space 12 between two half-panels 3' and 3" coupled to each other.

Furthermore, the peripheral portion 9 of the connection element 4 has at least one portion configured so as to be inserted into said lateral slot 12 between said opposing faces or between said half-panels 3', 3" of said support panel 3.

In particular, the slot 12 is tangentially parallel to the flat surface of the support panel 3 and the peripheral portion 9 of the connection element 4, which preferably has a circular shape, in particular a disc shape, and is flat so as to be easily inserted into said lateral slot 12.

Thanks to the solution according to the invention, the coupling between the connection element 4 and the support panel 3 occurs in a direction transversal to the vertical extent of the three-dimensional structure that is constructed. In particular, of the magnetic grid that is constructed between the bars and the spheres, it thus becoming more difficult for the panel and the connection element to become detached from each other inadvertently during the construction of the structure.

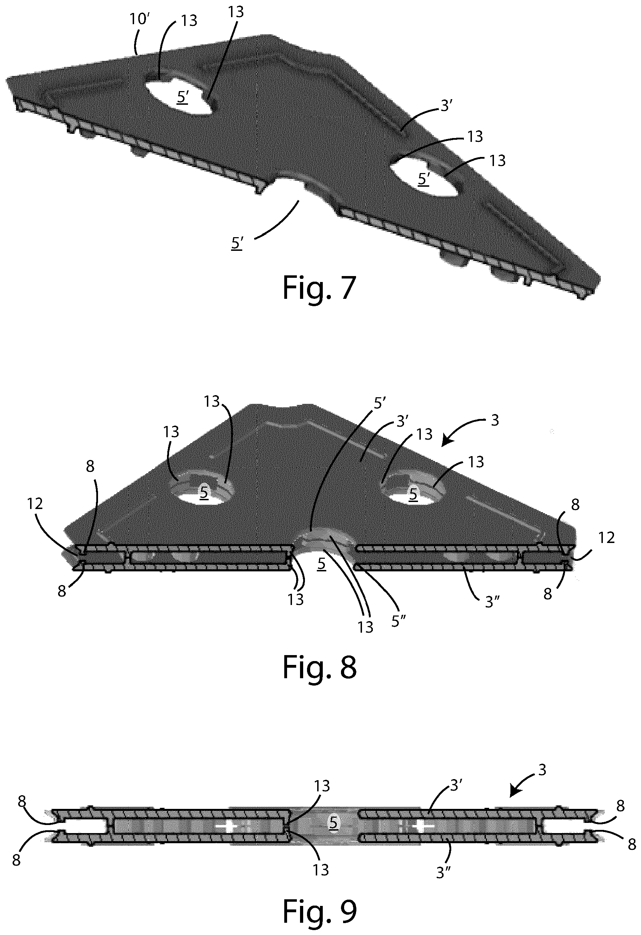

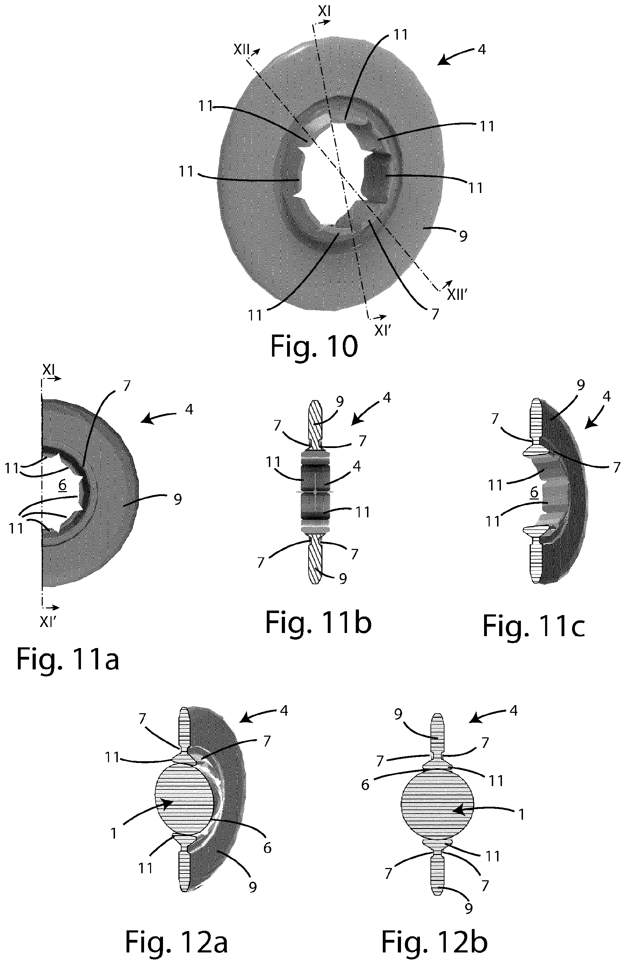

In particular, the interlock coupling between the connection element 4 and the support panel 3 is preferably obtained by means of a bayonet-like interlock. As shown specifically in figures 7 — 9, the lateral slot 12 of the support panel 3 has at least two opposing protuberances 8; each protuberance 8 is at the inner portion of the opposing faces of the support panel 3, in particular at the inner faces of the half-panels 3', 3". Furthermore, as shown in particular in figures 10 — 12, the peripheral portion 9 of the connection element 4 has an indentation 7 on each of the two opposing faces thereof so that when the peripheral portion 9 of the connection element 4 is inserted into the lateral slot 12, each protuberance 8 interlocks with the respective indentation 7.

In other embodiments, not shown, the protuberances can be fashioned in the peripheral portion of the connection element and the indentations can be fashioned in the lateral slot.

The interlocking between the connection element 4 and the support panel 3 advantageously enables the two elements to be rigidly locked, thereby stiffening the structure and, at the same time, it is easy to decouple by exerting a slight force.

The support panels 3 can have a polygonal shape, preferably a regular polygonal shape, in order that polygonal geometric figures can be constructed. In this case, the lateral slot 12 can be fashioned in at least one corner of said support panel 3. In the embodiment shown in the figures, the panels have a quadrangular shape and the slots 12 are fashioned in each corner.

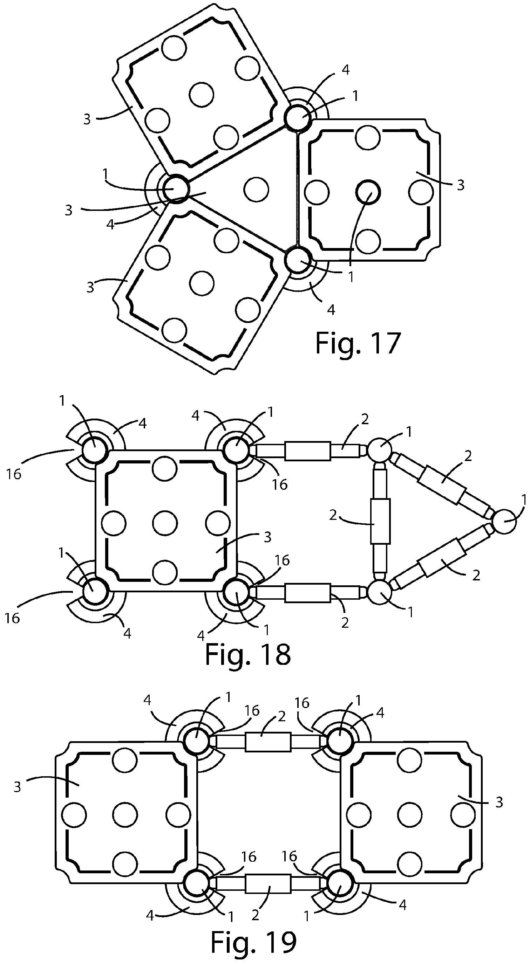

Figure 17 shows a support panel 3 that is triangular in shape coupled to three support panels 3 that are square in shape.

The lateral slot 12 of the panel 3 and the peripheral portion 9 of the connection element 4 preferably have dimensions such that, when the connection element 4 is coupled to the panel 3, the geometric centre of the element 1 housed in the connection element 4 substantially coincides, in a top view of the support panel 3, with the vertex of the corner of the panel 3 wherein said slot 12 is fashioned. In particular, when the ferromagnetic or magnetic element 1 is sphere-shaped, said elements are dimensioned so that the geometric centre of the sphere 1 substantially coincides, in a top view of the panel 3, with the vertex of the corner of the panel 3.

Furthermore, when the magnetic assembly according to the invention comprises bars 2 and the connection element 4 is suitable for housing a sphere 1, at least one side of the panel 3 with a polygonal shape is dimensioned so that when a connection element 4 is coupled in each of two contiguous corners of that side of the panel 3, the distance between the spheres 1 housed in said two connection elements 4 will be equal to the length of a bar 2.

If the magnetic assembly according to the invention comprises two bars 2 of two different lengths $l_1$ and $l_2$, as described previously, at least one side of the panel 3 with a polygonal shape is dimensioned so when a connection element 4 is coupled in each of two contiguous corners of that side of the panel 3, the distance between the spheres 1 housed in said two connection elements 4 will be equal to the length of the first bar 2.

Furthermore, each corner of the panel 3 having a lateral slot 12 can be chamfered or broken so as not to interfere with the ferromagnetic element 1 or magnetic element when it is disposed in said connection element 4 in turn coupled to the support panel 3.

Advantageously, the support panel 3 can also have one or more seats 5, in particular one or more holes 5, for housing a ferromagnetic element 1 or a magnetic element. In the embodiment shown in the figures, said seats 5 are suitable for housing respective spheres 1, in particular ferromagnetic spheres 1.

The further seats 5 make it possible to have further anchorage points for the structure to be built.

The panel 3 preferably has a seat 5 disposed at the geometric centre of a face thereof.

In particular, when the panel 3 has a square shape, and the seat 5 is suitable for housing a sphere 1, the panel 3 is dimensioned so that the distance between two spheres 1, each housed in a central seat 5 of two panels 3 coupled at a respective side, corresponds to the length of a bar 2. When the magnetic assembly comprises bars of two lengths, the distance between the two spheres disposed in the respective central seats 5 is preferably equal to the length $l_1$ of the first bar 1.

Again in the case of a panel 3 with a square shape, it can comprise at least a further seat 5 disposed on the panel 3 so that the distance between the sphere 1 housed in said further seat 5 and the sphere housed in a connection element 4 coupled at the vertex of a corner of the panel 3 is equivalent to the length of a bar 2, in particular in the case of bars of two lengths, equivalent to the length $l_1$ of the first bar 1.

In the embodiment shown in the figures, the panel 3 comprises five seats 5 arranged like a cross, with the central seat located at the geometric centre of the square panel 3.

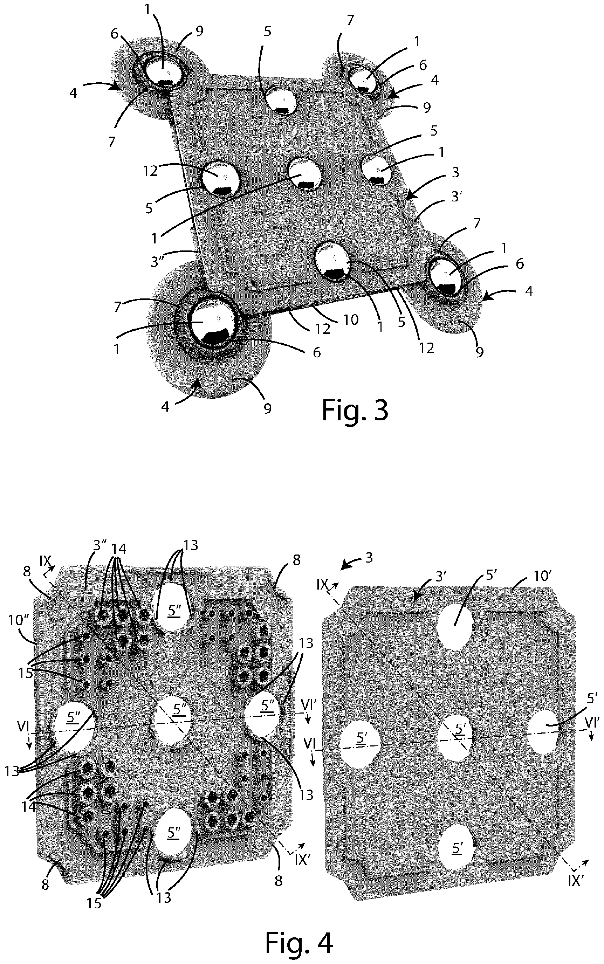

As said previously, and with particular reference to figures 2 and 4, the support panel 3 can comprise two half-panels 3' and 3" removably couplable to each other.

This makes it possible to increase the modularity of the solution and reduce production costs. In particular, said half-panels 3' and 3" can be identical.

Each half-panel 3', 3" can comprise male-female couplings 15, 14 of a mechanical type arranged on the inner face so as enable a female 14 male 15 coupling with another half-panel 3", 3'.

As shown in particular in figures 4 — 6, when the panel 3 also has seats 5 and consists of two half-panels 3', 3", each half-panel 3', 3" can have one or more holes 5', 5".

When the magnetic assembly according to the invention comprises one or more magnetic or ferromagnetic spheres 1, said holes 5', 5" have a diameter that is smaller than the diameter of said spheres 1 so as keep said spheres in place 1.

Furthermore, each half-panel 3', 3" can have clamping means 13 disposed at said holes 5', 5". Said clamping means 13 are configured so that when the respective ferromagnetic element 1 is disposed in the hole 5' or 5" of the inner face of a half-panel 3' or 3", and said half-panels 3', 3" are coupled to each other on the inner faces, said holes 5', 5" of each half-panel 3', 3" will be in a corresponding position and said spheres 1 disposed in said holes 5', 5" will be clamped into place by said holding means 13. In other words, said clamping means 13 exert a friction force on said spheres 1 so as prevent, or at least reduce, the rotation thereof inside the respective seat 5 during the creation of the three-dimensional structure.

This solution facilitates the construction of complex three-dimensional structures even by less capable users, such as children.

In the particular embodiment, the clamping elements are three tabs 13 suitable for pushing the edge of the sphere 1, when it is housed in said seat 6, towards the opposite side so as to create friction on the surface of the sphere 1 and clamp it in place.

Advantageously, the clamping means renders the structure stiffer and more resistant, since the anchorage points represented by the ferromagnetic elements 1 are irremovably anchored to the support panels 3.

In other words, at the stage of assembly of the two half-panels 3', 3", ferromagnetic elements 1 can be inserted, in particular spheres or balls, which will then be the points of attachment on which to build the three-dimensional magnetic structure, composed, in particular, of bars and spheres.

Only by disassembling the half-panels 3' and 3" from each other will it be possible to remove the ferromagnetic 1 or magnetic elements, or the spheres, clamped thereto.

In the case of whole support panels or panels formed from preassembled half-panels, for example ultrasonically welded, the ferromagnetic or magnetic elements can be inserted so as to interlock, for example similarly to the seats of the connection elements.

Moving on to the removable coupling between the ferromagnetic element 1 or the magnetic element and the seat 6 of the connection element 4, it is preferably a mechanical coupling.

In this case as well, the mechanical coupling enables the number of magnetic components to be reduced, thus reducing the assembly costs for the end user and at the same time reducing the weight of the package of the assembly.

In the embodiment shown in the figures, the ferromagnetic element 1 preferably has a spherical geometric shape, and the seat 6 has a shape such as to house said ferromagnetic sphere 1 by interlocking.

With particular reference to figures 10 - 12, the seat 6 is configured so as to lock said ferromagnetic element 1 or said magnetic element in place. For example, in the case of sphere-shaped elements 1, the diameter of said seat 6 is smaller than the diameter of the sphere 1.

In particular, in the case of sphere-shaped elements to be housed in said seat 6, the connection element 4 can have a plurality of teeth 11 at said seat 6 to facilitate the insertion of the sphere 1, decrease the pressure necessary to insert the sphere 1, and lend flexibility to the hole of the seat 6.

Said teeth 11 preferably have a curved section where they meet the surface of the sphere 1.

Advantageously, the seat of the connection element 6 can be a through hole 6 such as to enable said ferromagnetic element 1 or said magnetic element, for example sphere-shaped, to be housed by one of the two opposing faces of said connection element 4.

This, advantageously, makes it possible to create magnetic couplings between the ferromagnetic and magnetic elements on both faces of the support panels 3.

As shown in the embodiments of figures 18 and 19, the connection element 4 can have one or more openings 16 so that, when a ferromagnetic element 1 or a magnetic element, preferably a sphere-shaped element 1, is disposed in the seat 6 of the connection element 4, said opening 16 enables the insertion of a magnetic element 2 or a ferromagnetic element, preferably a bar-shaped element 2, in order to allow the magnetic coupling.

For example, the disc-shaped connection element 4, can have a split 16, which would enable the insertion of a magnetic bar set coplanarly to the panel, rather than only transversely thereto.

Furthermore, it would make it possible, for example in the case of the embodiment in figure 18, to join to a three-dimensional structure formed solely from magnetic elements, or, as in the case of figure 19, to join two three-dimensional structures each formed by the connection elements and support panels.

In conclusion, the magnetic assembly according to the invention has the following advantages:

- ease of use for small children and beginners, since the support panels render the structure stiffer, thus facilitating construction;
- the components with mechanical couplings, panels and connection elements enrich the magnetic toy, enhancing the playability thereof;
- it enables more possible angles to be obtained given the possibility of having several points of attachment and thus more ferromagnetic spheres to which to attach the magnetic bars;
- lightweight but very sturdy constructions are obtained;
- there are savings in terms of cost, because fewer magnetic bars are used to obtain similar constructions.

In the foregoing, the preferred embodiments have been described and variants of the present invention have been suggested, but it is to be understood that a person skilled in the art may introduce modifications and changes without going outside the scope of protection, as defined by the appended claims.

**Claims**

1. A magnetic assembly for creating three-dimensional structures, said magnetic assembly comprising

   at least one ferromagnetic element (1),
   at least one magnetic element (2), magnetically couplable to said at least one ferromagnetic element (1), and
   at least one support panel (3) having a perimeter edge (10),
   said magnetic assembly being **characterised in that** it further comprises at least one connection element (4), said at least one connection element (4) comprising a seat (6) for removably housing and retaining a ferromagnetic element (1) or a magnetic element, and at least one peripheral portion (9) suitable for being removably coupled to at least one portion of the perimeter edge (10) of said support panel (3), becoming locked thereto.

2. The magnetic assembly according to claim 1, **characterised in that** said ferromagnetic element (1) or said magnetic element has a spherical shape, and **in that** said seat (6) of the connection element (4) has a shape such as to house said spherical element (1) by interlocking.

3. The magnetic assembly according to any one of the preceding claims, **characterised in that** said support panel (3) has one or more seats (5), in particular one or more holes (5), for housing a ferromagnetic element (1) or a magnetic element.

4. The magnetic assembly according to any one of the preceding claims, **characterised in that** at least one portion of the perimeter edge (10) of said support panel (3) has a lateral slot (12) for the insertion of the peripheral portion (9) of said connection element (4) therein.

5. The magnetic assembly according to the preceding claim, **characterised in that** said peripheral portion (9) of said connection element (4) is coupled to said lateral slot (12) of said panel (3) by means of a bayonet-like interlock.

6. The magnetic assembly according to claim 4 or 5, **characterised in that** said lateral slot (12) is fashioned between the opposing faces (3', 3") of said support panel (3), and **in that** said peripheral portion (9) of said connection element (4) has at least one portion configured so as to be inserted into said lateral slot (12) between said opposing faces (3', 3") of said support panel (3).

7. The magnetic assembly according to the preceding claim, **characterised in that** said lateral slot (12) has at least two protuberances (8) or opposing indentations, each protuberance (8) or indentation being at the inner portion of the opposing faces (3', 3") of the panel (3), and **in that** the peripheral portion (9) of said connection element (4) has an indentation (7) or a protuberance on each of the two opposing faces thereof so that when said peripheral portion (9) of said connection element (4) is inserted into said lateral slot (12), each protuberance (8) or indentation interlocks with the respective indentation (7) or protuberance.

8. The magnetic assembly according to any one of claims 4 — 7, **characterised in that** said support panel (3) has a polygonal shape, and **in that** said lateral slot (12) is fashioned in at least one corner of said polygonal support panel (3).

9. The magnetic assembly according to the preceding claim, **characterised in that** the lateral slot (12) of the support panel (3) and the peripheral portion (9) of the connection element (4) have dimensions such that, when the connection element (4) is coupled to the support panel (3), the geometric centre of the element (1) housed in the connection element (4) substantially coincides, in a top view of the panel (3), with the vertex of the corner of the panel (3) wherein said slot (12) is fashioned.

10. The magnetic assembly according to the preceding claim, **characterised in that** each corner having said lateral slot (12) is chamfered or broken so as not to interfere with the ferromagnetic element (1) or magnetic element when it is disposed in said connection element (4) in turn coupled to the support panel (3).

11. The magnetic assembly according to any one of claims 8 - 10, **characterised in that** the element (1) to be housed in said seat (6) of said connection element (4) is sphere-shaped, **in that** it comprises at least one bar-shaped element (2) magnetically couplable to at least one sphere-shaped element (1), and **in that** at least one side of said support panel (3) with a polygonal shape is dimensioned so that when a connection element (4) is coupled in each of two contiguous corners of that side of the panel (3), the distance between the sphere-shaped elements (1) housed in said two connection elements (1) is equal to the length of a bar-shaped element (2).

12. The magnetic assembly according to any one of the preceding claims, **characterised in that** said support panel (3) comprises two half-panels (3', 3") that are removably couplable to each other.

13. The magnetic assembly according to the preceding claim, when dependent on claim 3, **characterised in that** each half-panel (3', 3") has one or more holes (5', 5") suitable for housing sphere-shaped elements (1) and clamping means (13) at said holes (5', 5") configured so that when the respective spherical element (1) is disposed at the hole (5'; 5") of the inner face of a half-panel (3'; 3"), and said half-panels (3', 3") are coupled to each other on the inner faces, said holes (5', 5") of each half-panel (3', 3") will be in a corresponding position and said sphere-shaped elements (1) disposed on said one or more holes (5', 5") will be clamped in place by said clamping means (13), thus preventing or reducing the rotation thereof.

14. The magnetic assembly according to any one of the preceding claims, **characterised in that** said connection element (4) has a disc shape.

15. The magnetic assembly according to any one of the preceding claims, **characterised in that** said connection element (4) has one or more openings (16) so that, when a ferromagnetic element (1) or a magnetic element is disposed in the seat (6) of the connection element (4), said opening (16) enables the insertion of a magnetic element (2) or a ferromagnetic element to allow the magnetic coupling.

16. The magnetic assembly according to any one of the preceding claims, **characterised in that** the removable coupling between said ferromagnetic element (1) or said magnetic element (2) and the seat (6) of said connection element (4) is a mechanical coupling.

17. The magnetic assembly according to any one of the preceding claims, **characterised in that** said seat (6) of said connection element (4) has a plurality of teeth (11) shaped so as to facilitate the insertion of said ferromagnetic element (1) or said magnetic element (2).

18. The magnetic assembly according to any one of the preceding claims, **characterised in that** said seat (6) of said connection element (4) is a through hole (6), such as to enable said ferromagnetic element (1) or said magnetic element (2) to be housed by one of the two opposing faces of said connection element (4).

19. The magnetic assembly according to any one of the preceding claims, **characterised in that** the removable coupling between the peripheral portion (9) of said connection element (4) and said portion of the perimeter edge (10) of said support panel (3) is a mechanical coupling.

20. The magnetic assembly according to any one of claims 4 - 19, when dependent on claim 4, **characterised in that** the ferromagnetic element (1) or the magnetic element (2) to be housed in said connection element (4) has a spherical shape, and the lateral slot (12) of the support panel (3) and the peripheral portion (9) of the connection element (4) have dimensions such that, when the connection element (1) is coupled to the support panel (3) and the spherical element (1; 2) is housed in said seat (6) of the connection element (4), the geometric centre of the spherical element (1; 2) substantially coincides, in a top view of the panel (3) with the vertex of the corner of the panel (3) in which said slot (12) is provided

21. The magnetic assembly according to any one of claims 12 - 20, when dependent on claim 12, **characterised in that** said half-panels (3'; 3") comprise male-female couplings of a mechanical type.

22. The magnetic assembly according to any one of the preceding claims, **characterised in that** said magnetic element (2) or said ferromagnetic element (1) is a bar.

**Patentansprüche**

1. Magnetische Anordnung zur Erzeugung dreidimensionaler Strukturen, wobei die magnetische Anordnung

mindestens ein ferromagnetisches Element (1), mindestens ein magnetisches Element (2), das mit dem mindestens einen ferromagnetischen Element (1) magnetisch koppelbar ist, und mindestens eine Trägerplatte (3) mit einem Umfangsrand (10) umfasst, wobei die magnetische Anordnung **dadurch gekennzeichnet ist, dass** sie weiter mindestens ein Verbindungselement (4) umfasst, wobei das mindestens eine Verbindungselement (4) einen Sitz (6) zum lösbaren Aufnehmen und Halten eines ferromagnetischen Elements (1) oder eines magnetischen Elements und mindestens einen peripheren Abschnitt (9) umfasst, der dazu geeignet ist, lösbar mit mindestens einem Abschnitt des Umfangsrands (10) der Trägerplatte (3) gekoppelt zu werden, wobei er daran verriegelt wird.

2. Magnetische Anordnung nach Anspruch 1, **dadurch gekennzeichnet, dass** das ferromagnetische Element (1) oder das magnetische Element eine Kugelform aufweist, und dass der Sitz (6) des Verbindungselements (4) eine solche Form hat, dass er das kugelförmige Element (1) durch Ineinandergreifen aufnimmt.

3. Magnetische Anordnung nach einem der vorstehenden Ansprüche, **dadurch gekennzeichnet, dass** die Trägerplatte (3) einen oder mehrere Sitze (5), insbesondere eine oder mehrere Bohrungen (5), zur Aufnahme eines ferromagnetischen Elements (1) oder eines magnetischen Elements aufweist.

4. Magnetische Anordnung nach einem der vorstehenden Ansprüche, **dadurch gekennzeichnet, dass** mindestens ein Abschnitt des Umfangsrandes (10) der Trägerplatte (3) einen seitlichen Schlitz (12) zum Einsetzen des peripheren Abschnitts (9) des Verbindungselements (4) darin aufweist.

5. Magnetische Anordnung nach dem vorstehenden Anspruch, **dadurch gekennzeichnet, dass** der periphere Abschnitt (9) des Verbindungselements (4) mit dem seitlichen Schlitz (12) der Platte (3) mittels einer bajonettartigen Verriegelung gekoppelt ist.

6. Magnetische Anordnung nach Anspruch 4 oder 5, **dadurch gekennzeichnet, dass** der seitliche Schlitz (12) zwischen den gegenüberliegenden Flächen (3', 3") der Trägerplatte (3) ausgebildet ist, und dass der periphere Abschnitt (9) des Verbindungselements (4) mindestens einen Abschnitt aufweist, der so konfiguriert ist, dass er in den seitlichen Schlitz (12) zwischen den gegenüberliegenden Flächen (3', 3") der Trägerplatte (3) eingesetzt werden kann.

7. Magnetische Anordnung nach dem vorstehenden Anspruch, **dadurch gekennzeichnet, dass** der seitliche Schlitz (12) mindestens zwei Ausstülpungen (8) oder gegenüberliegende Vertiefungen aufweist, wobei sich jede Ausstülpung (8) oder Vertiefung auf dem inneren Abschnitt der gegenüberliegenden Flächen (3', 3") der Platte (3) befindet, und dass der periphere Abschnitt (9) des Verbindungselements (4) auf jeder seiner beiden gegenüberliegenden Flächen eine Vertiefung (7) oder eine Ausstülpung aufweist, so dass, wenn der periphere Abschnitt (9) des Verbindungselements (4) in den seitlichen Schlitz (12) eingeführt wird, jede Ausstülpung (8) oder Vertiefung mit der jeweiligen Vertiefung (7) oder Ausstülpung ineinandergreift.

8. Magnetische Anordnung nach einem der Ansprüche 4-7, **dadurch gekennzeichnet, dass** die Trägerplatte (3) eine polygonale Form aufweist und dass der seitliche Schlitz (12) in mindestens einer Ecke der polygonalen Trägerplatte (3) ausgebildet ist.

9. Magnetische Anordnung nach dem vorstehenden Anspruch, **dadurch gekennzeichnet, dass** der seitliche Schlitz (12) der Trägerplatte (3) und der periphere Abschnitt (9) des Verbindungselements (4) solche Abmessungen aufweisen, dass, wenn das Verbindungselement (4) mit der Trägerplatte (3) gekoppelt ist, der geometrische Mittelpunkt des in dem Verbindungselement (4) aufgenommenen Elements (1) in einer Draufsicht auf die Platte (3) im Wesentlichen mit dem Scheitelpunkt der Ecke der Platte (3) übereinstimmt, wobei der Schlitz (12) ausgebildet ist.

10. Magnetische Anordnung nach dem vorstehenden Anspruch, **dadurch gekennzeichnet, dass** jede Ecke, die den seitlichen Schlitz (12) aufweist, abgeschrägt oder gebrochen ist, um das ferromagnetische Element (1) oder das magnetische Element nicht zu stören, wenn es in dem Verbindungselement (4) angeordnet ist, das seinerseits mit der Trägerplatte (3) gekoppelt ist.

11. Magnetische Anordnung nach einem der Ansprüche 8 bis 10, **dadurch gekennzeichnet, dass** das in dem Sitz (6) des Verbindungselements (4) aufzunehmende Element (1) kugelförmig ist, dass es mindestens ein stabförmiges Element (2) umfasst, das mit mindestens einem kugelförmigen Element (1) magnetisch koppelbar ist, und dass mindestens eine Seite der Trägerplatte (3) mit einer polygonalen Form so dimensioniert ist, dass, wenn ein Verbindungselement (4) in jeder von zwei zusammenhängenden Ecken dieser Seite der Platte (3) gekoppelt ist, der Abstand zwischen den kugelförmigen Elementen (1), die in den beiden Verbindungselementen (1) aufgenommen sind, gleich der Länge eines stabförmigen Elements (2) ist.

12. Magnetische Anordnung nach einem der vorstehenden Ansprüche, **dadurch gekennzeichnet, dass** die Trägerplatte (3) zwei Halbplatten (3', 3") umfasst, die lösbar miteinander koppelbar sind.

13. Magnetische Anordnung nach dem vorstehenden Anspruch, wenn sie von Anspruch 3 abhängt, **dadurch gekennzeichnet, dass** jede Halbplatte (3', 3") eine oder mehrere Bohrungen (5', 5") aufweist, die zur Aufnahme von kugelförmigen Elementen (1) geeignet sind, und Klemmmittel (13) an den Bohrungen (5', 5"), die so konfiguriert sind, dass, wenn das jeweilige kugelförmige Element (1) an der Bohrung (5'; 5") der Innenfläche einer Halbplatte (3'; 3") angeordnet ist und die Halbplatten (3', 3") an den Innenflächen miteinander gekoppelt sind, die Bohrungen (5', 5") jeder Halbplatte (3', 3") sich in einer entsprechenden Position befinden und die kugelförmigen Elemente (1), die an den einen oder mehreren Bohrungen (5', 5") angeordnet sind, durch die Klemmmittel (13) festgeklemmt werden, wodurch ihre Drehung verhindert oder verringert wird.

14. Magnetische Anordnung nach einem der vorstehenden Ansprüche, **dadurch gekennzeichnet, dass** das Verbindungselement (4) eine Scheibenform aufweist.

15. Magnetische Anordnung nach einem der vorstehenden Ansprüche, **dadurch gekennzeichnet, dass** das Verbindungselement (4) eine oder mehrere Öffnungen (16) aufweist, so dass, wenn ein ferromagnetisches Element (1) oder ein magnetisches Element im Sitz (6) des Verbindungselements (4) angeordnet ist, die Öffnung (16) das Einsetzen eines magnetischen Elements (2) oder eines ferromagnetischen Elements ermöglicht, um die magnetische Kopplung zu ermöglichen.

16. Magnetische Anordnung nach einem der vorstehenden Ansprüche, **dadurch gekennzeichnet, dass** die lösbare Kopplung zwischen dem ferromagnetischen Element (1) oder dem magnetischen Element (2) und dem Sitz (6) des Verbindungselements (4) eine mechanische Kopplung ist.

17. Magnetische Anordnung nach einem der vorstehenden Ansprüche, **dadurch gekennzeichnet, dass** der Sitz (6) des Verbindungselements (4) eine Vielzahl von Zähnen (11) aufweist, die so geformt sind, dass sie das Einsetzen des ferromagnetischen Elements (1) oder des magnetischen Elements (2) erleichtern.

18. Magnetische Anordnung nach einem der vorstehenden Ansprüche, **dadurch gekennzeichnet, dass** der Sitz (6) des Verbindungselements (4) eine Durchgangsbohrung (6) ist, sodass ermöglicht wird, dass das ferromagnetische Element (1) oder das magnetische Element (2) von einer der beiden gegenüberliegenden Flächen des Verbindungselements (4) aufgenommen werden kann.

**19.** Magnetische Anordnung nach einem der vorstehenden Ansprüche, **dadurch gekennzeichnet, dass** die lösbare Kopplung zwischen dem peripheren Abschnitt (9) des Verbindungselements (4) und dem Abschnitt des Umfangsrands (10) der Trägerplatte (3) eine mechanische Kopplung ist.

**20.** Magnetische Anordnung nach einem der Ansprüche 4-19, wenn sie von Anspruch 4 abhängt, **dadurch gekennzeichnet, dass** das ferromagnetische Element (1) oder das magnetische Element (2), das in dem Verbindungselement (4) aufgenommen werden soll, eine Kugelform aufweist und der seitliche Schlitz (12) der Trägerplatte (3) und der periphere Abschnitt (9) des Verbindungselements (4) solche Abmessungen aufweisen, dass, wenn das Verbindungselement (1) mit der Trägerplatte (3) gekoppelt ist und das kugelförmige Element (1; 2) in dem Sitz (6) des Verbindungselements (4) aufgenommen ist, der geometrische Mittelpunkt des kugelförmigen Elements (1; 2) im Wesentlichen in einer Draufsicht auf die Platte (3) mit dem Scheitelpunkt der Ecke der Platte (3) zusammenfällt, in welcher der Schlitz (12) bereitgestellt ist.

**21.** Magnetische Anordnung nach einem der Ansprüche 12-20, wenn sie von Anspruch 12 abhängt, **dadurch gekennzeichnet, dass** die Halbplatten (3'; 3") männlich-weibliche Kopplungen eines mechanischen Typs umfassen.

**22.** Magnetische Anordnung nach einem der vorstehenden Ansprüche, **dadurch gekennzeichnet, dass** das magnetische Element (2) oder das ferromagnetische Element (1) ein Stab ist.

**Revendications**

**1.** Ensemble magnétique pour créer des structures tridimensionnelles, ledit ensemble magnétique comprenant

au moins un élément ferromagnétique (1),
au moins un élément magnétique (2), couplable magnétiquement audit au moins un élément ferromagnétique (1), et
au moins un panneau de support (3) présentant un bord périmétrique (10), ledit ensemble magnétique étant **caractérisé en ce qu'**il comprend en outre au moins un élément de connexion (4), ledit au moins un élément de connexion (4) comprenant un siège (6) destiné à loger et maintenir de manière amovible un élément ferromagnétique (1) ou un élément magnétique, et au moins une partie périphérique (9) adaptée pour être couplée de manière amovible à au moins une partie du bord périmétrique (10) dudit panneau de support (3), devenant solidaire de celle-ci.

**2.** Ensemble magnétique selon la revendication 1, **caractérisé en ce que** ledit élément ferromagnétique (1) ou ledit élément magnétique présente une forme sphérique, et **en ce que** ledit siège (6) de l'élément de connexion (4) présente une forme telle qu'elle permet de loger ledit élément sphérique (1) par interverrouillage.

**3.** Ensemble magnétique selon l'une quelconque des revendications précédentes, **caractérisé en ce que** ledit panneau de support (3) présente un ou plusieurs sièges (5), en particulier un ou plusieurs trous (5), pour loger un élément ferromagnétique (1) ou un élément magnétique.

**4.** Ensemble magnétique selon l'une quelconque des revendications précédentes, **caractérisé en ce qu'**au moins une partie du bord périmétrique (10) dudit panneau de support (3) présente une fente latérale (12) pour l'insertion de la partie périphérique (9) dudit élément de connexion (4) à l'intérieur de celle-ci.

**5.** Ensemble magnétique selon la revendication précédente, **caractérisé en ce que** ladite partie périphérique (9) dudit élément de connexion (4) est couplée à ladite fente latérale (12) dudit panneau (3) au moyen d'un interverrouillage de type à baïonnette.

**6.** Ensemble magnétique selon la revendication 4 ou 5, **caractérisé en ce que** ladite fente latérale (12) est prévue entre les faces opposées (3', 3") dudit panneau de support (3), et **en ce que** ladite partie périphérique (9) dudit élément de connexion (4) présente au moins une partie conçue de sorte à être insérée dans ladite fente latérale (12) entre lesdites faces opposées (3', 3") dudit panneau de support (3).

**7.** Ensemble magnétique selon la revendication précédente, **caractérisé en ce que** ladite fente latérale (12) présente au moins deux protubérances (8) ou indentations opposées, chaque protubérance (8) ou indentation étant au niveau de la partie interne des faces opposées (3', 3") du panneau (3), et **en ce que** la partie périphérique (9) dudit élément de connexion (4) présente une indentation (7) ou une protubérance sur chacune des deux faces opposées de celle-ci de sorte que lorsque ladite partie périphérique (9) dudit élément de connexion (4) est insérée dans ladite fente latérale (12), chaque protubérance (8) ou indentation se verrouille avec l'indentation (7) ou protubérance respective.

**8.** Ensemble magnétique selon l'une quelconque des revendications 4-7, **caractérisé en ce que** ledit panneau de support (3) présente une forme polygonale, et **en ce que** ladite fente latérale (12) est prévue dans au moins un angle dudit panneau de support polygonal (3).

9. Ensemble magnétique selon la revendication précédente, **caractérisé en ce que** la fente latérale (12) du panneau de support (3) et la partie périphérique (9) de l'élément de connexion (4) présentent des dimensions telles que, lorsque l'élément de connexion (4) est couplé au panneau de support (3), le centre géométrique de l'élément (1) logé dans l'élément de connexion (4) coïncide sensiblement, sur une vue de dessus du panneau (3), avec le sommet de l'angle du panneau (3) dans lequel ladite fente (12) est prévue.

10. Ensemble magnétique selon la revendication précédente, **caractérisé en ce que** chaque angle présentant ladite fente latérale (12) est chanfreiné ou brisé de sorte à ne pas interférer avec l'élément ferromagnétique (1) ou l'élément magnétique lorsqu'il est disposé dans ledit élément de connexion (4) couplé à son tour au panneau de support (3).

11. Ensemble magnétique selon l'une quelconque des revendications 8-10, **caractérisé en ce que** l'élément (1) devant être logé dans ledit siège (6) dudit élément de connexion (4) est de forme sphérique, **en ce qu'**il comprend au moins un élément en forme de barre (2) couplable magnétiquement à au moins un élément de forme sphérique (1), et **en ce qu'**au moins un côté dudit panneau de support (3) de forme polygonale est dimensionné de telle sorte que lorsqu'un élément de connexion (4) est couplé dans chacun de deux angles contigus de ce côté du panneau (3), la distance entre les éléments de forme sphérique (1) logés dans lesdits deux éléments de connexion (1) est égale à la longueur d'un élément en forme de barre (2).

12. Ensemble magnétique selon l'une quelconque des revendications précédentes, **caractérisé en ce que** ledit panneau de support (3) comprend deux demi-panneaux (3', 3") qui sont couplables de manière amovible l'un à l'autre.

13. Ensemble magnétique selon la revendication précédente, lorsqu'elle dépend de la revendication 3, **caractérisé en ce que** chaque demi-panneau (3', 3") présente un ou plusieurs trous (5', 5") adaptés pour loger des éléments de forme sphérique (1) et des moyens de fixation (13) au niveau desdits trous (5', 5") conçus de telle sorte que lorsque l'élément sphérique (1) respectif est disposé au niveau du trou (5' ; 5") de la face interne d'un demi-panneau (3' ; 3"), et lesdits demi-panneaux (3', 3") sont couplés l'un à l'autre sur les faces internes, lesdits trous (5', 5") de chaque demi-panneau (3', 3") seront dans une position correspondante et lesdits éléments de forme sphérique (1) disposés sur lesdits un ou plusieurs trous (5', 5") seront fixés en place par lesdits moyens de fixation (13), empêchant ou réduisant ainsi la rotation de ceux-ci.

14. Ensemble magnétique selon l'une quelconque des revendications précédentes, **caractérisé en ce que** ledit élément de connexion (4) présente une forme de disque.

15. Ensemble magnétique selon l'une quelconque des revendications précédentes, **caractérisé en ce que** ledit élément de connexion (4) présente une ou plusieurs ouvertures (16) de sorte que, lorsqu'un élément ferromagnétique (1) ou un élément magnétique est disposé dans le siège (6) de l'élément de connexion (4), ladite ouverture (16) permet l'insertion d'un élément magnétique (2) ou d'un élément ferromagnétique pour permettre le couplage magnétique.

16. Ensemble magnétique selon l'une quelconque des revendications précédentes, **caractérisé en ce que** le couplage amovible entre ledit élément ferromagnétique (1) ou ledit élément magnétique (2) et le siège (6) dudit élément de connexion (4) est un couplage mécanique.

17. Ensemble magnétique selon l'une quelconque des revendications précédentes, **caractérisé en ce que** ledit siège (6) dudit élément de connexion (4) présente une pluralité de dents (11) formées de sorte à faciliter l'insertion dudit élément ferromagnétique (1) ou dudit élément magnétique (2).

18. Ensemble magnétique selon l'une quelconque des revendications précédentes, **caractérisé en ce que** ledit siège (6) dudit élément de connexion (4) est un trou traversant (6), de sorte à permettre audit élément ferromagnétique (1) ou audit élément magnétique (2) d'être logé par une des deux faces opposées dudit élément de connexion (4).

19. Ensemble magnétique selon l'une quelconque des revendications précédentes, **caractérisé en ce que** le couplage amovible entre la partie périphérique (9) dudit élément de connexion (4) et ladite partie du bord périmétrique (10) dudit panneau de support (3) est un couplage mécanique.

20. Ensemble magnétique selon l'une quelconque des revendications 4-19, lorsqu'elles dépendent de la revendication 4, **caractérisé en ce que** l'élément ferromagnétique (1) ou l'élément magnétique (2) devant être logé dans ledit élément de connexion (4) présente une forme sphérique, et la fente latérale (12) du panneau de support (3) et la partie périphérique (9) de l'élément de connexion (4) ont des dimensions telles que, lorsque l'élément de connexion (1) est couplé au panneau de support (3) et l'élément sphérique (1 ; 2) est logé dans ledit siège (6) de l'élément de connexion (4), le centre géométrique de l'élément sphérique (1 ; 2) coïncide sensiblement, sur une vue de dessus du panneau (3) avec le sommet de l'angle du panneau (3) dans lequel ladite fente (12) est prévue.

21. Ensemble magnétique selon l'une quelconque des revendications 12-20, lorsqu'elles dépendent de la revendication 12, **caractérisé en ce que** lesdits demi-panneaux (3' ; 3") comprennent des éléments de couplage mâle-femelle d'un type mécanique.

22. Ensemble magnétique selon l'une quelconque des revendications précédentes, **caractérisé en ce que** ledit élément magnétique (2) ou ledit élément ferromagnétique (1) est une barre.

Fig. 1

Fig. 2

Fig. 3

Fig. 4

Fig. 5

Fig. 6

Fig. 7

Fig. 8

Fig. 9

Fig. 10

Fig. 11a

Fig. 11b

Fig. 11c

Fig. 12a

Fig. 12b

Fig. 13

Fig. 14

Fig. 15

Fig. 16

Fig. 17

Fig. 18

Fig. 19

**EP 3 685 893 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1349626 B1
- WO 2006129903 A1